# EUROPEAN PATENT APPLICATION

(11) **EP 4 564 709 A1**
(43) Date of publication of application: **04.06.2025**
(21) Application number: 23846025.7
(22) Date of filing: 07.06.2023
(51) Int. Cl.: H04B 10/80, G08C 15/06

(54) **UNDERWATER OPTICAL WIRELESS COMMUNICATION SYSTEM**

(30) Priority: 26.07.2022 JP 2022118802
(71) Applicant: SHIMADZU CORPORATION, Kyoto-shi, Kyoto 604-8511 (JP)
(72) Inventor: EBARA, Yuki, Kyoto-shi, Kyoto 604-8511 (JP)
(74) Representative: Müller-Boré & Partner Patentanwälte PartG mbB
(86) International application number: PCT/JP2023/021141
(87) International publication number: WO 2024/024289

(57) **Abstract**

An underwater optical wireless communication system (100) according to this invention includes a first communication device (2) for rotating together with a rotating body (1) underwater; and a second communication device (3) for wirelessly communicating with the first communication device (2) in a direction intersecting a rotation axis (60) of the rotating body, wherein the first communication device includes a first light emitter (20) for emitting first light (50), and a first information converter (21) for converting state information (40) input from a state information detector (4) for detecting the state information, which is information on the state of the rotating body, into the first light, and the second communication device includes a second light receiver (30) for receiving the first light.

## Description

### Technical Field

The invention relates to an underwater optical wireless communication system, in particular to an underwater optical wireless communication system transmitting information on a rotating body installed underwater.

### Background Art

Underwater optical wireless communication systems transmitting information on rotating bodies installed underwater are known. Such an underwater communication system is disclosed in Japanese Patent Publication No. JP 6380722, for example.

Japanese Patent Publication No. JP 6380722 discloses a hydroelectric power control system including a first detector, a first wireless communication device and a controller, and transmitting a rotation speed of a waterwheel. The first detector disclosed in Japanese Patent Publication No. JP 6380722 detects the rotation speed of the waterwheel based on a gear that interlocks with the rotation of the waterwheel and a pop-up sensor arranged in proximity to the gear. Also, the first wireless communication device is configured to transmit the rotational speed of the waterwheel detected by the first detector to the controller through wireless communication using radio waves.

### Prior Art

### Patent Document

Patent Document 1: Japanese Patent Publication No. JP 6380722

### Summary of the Invention

### Problems to be Solved by the Invention

Although not stated in Japanese Patent Publication No. JP 6380722, there are needs to acquire information on the waterwheel (rotating body) itself while being driven (rotated). To acquire information (state information) on the rotating body itself, it is necessary to install the first detector (state information detector) and the first wireless communication device (first communication device) underwater together with the rotating body. However, in a configuration disclosed in Japanese Patent Publication No. JP 6380722, the first communication device uses radio waves for wireless communication. Although not stated in Japanese Patent Publication No. JP 6380722, it is generally known that radio waves greatly attenuate in water and are not suitable for underwater communication. For this reason, in a case in which the first communication device disclosed in Japanese Patent Publication No. JP 6380722 is installed underwater to acquire the state information of the rotating body during rotation, it is difficult to acquire the information from the state information detector installed underwater together with the rotating body.

The present invention is intended to solve the above problem, and one object of the present invention is to provide an underwater optical wireless communication system capable of acquiring information on a rotating body rotating underwater through wireless communication by using a communication device installed together with the rotating body.

### Means for Solving the Problems

An underwater optical wireless communication system according to one aspect of the present invention is an underwater optical wireless communication system for acquiring a state of a rotating body rotating underwater, the underwater optical wireless communication system including a first communication device provided to the rotating body for rotating together with the rotating body; and a second communication device spaced away from the first communication device in a direction intersecting a rotation axis of the rotating body to wirelessly communicate with the first communication device by using light, wherein the first communication device includes a first light emitter for emitting first light to be used for communication with the second communication device as the light in the direction intersecting the rotation axis of the rotating body, and an information converter for converting state information input from a state information detector for detecting the state information, which is information on the state of the rotating body, into the first light, and the second communication device includes a second light receiver for receiving the first light.

### Effect of the Invention

An underwater optical wireless communication system according to the one aspect of the present invention includes a first communication device including a first light emitter for emitting first light to be used for communication with a second communication device, and an information converter for converting state information input from a state information detector for detecting the state information, which is information on a state of a rotating body, into the first light; and a second communication device including a second light receiver for receiving the first light. Accordingly, the first communication device transmits the state information by using the first light, which is light whose attenuation is smaller than radio waves in water. For this reason, even in a case in which the first communication device is installed underwater together with the rotating body, the first communication device and the second communication device can wirelessly communicate with each other. Consequently, it is possible to provide an underwater optical wireless communication system capable of acquiring information on the rotating body rotating underwater (state information) through wireless communication by using the first communication device installed together with the rotating body. Also, the first communication device transmits the state information to the second communication device positioned in a direction intersecting a rotation axis of the rotating body. Consequently, even if it is difficult to position the second communication device in a direction extending along the rotation axis of the rotating body with respect to the first communication device in order to constantly receive light from the first communication device irrespective of a rotational angular position of the rotating body, the state information can be transmitted from the first communication device to the second communication device.

### Brief Description of the Drawings

FIG. 1 is a block diagram showing an entire configuration of an underwater optical wireless communication system according to one embodiment.
FIG. 2 is a schematic view showing a facility in which the underwater optical wireless communication system according to the one embodiment is used.
FIG. 3 is a block diagram illustrating configurations of first and second communication devices according to the one embodiment.
FIG. 4 is a schematic view illustrating the configuration of the first communication device that emits first light in a direction intersecting a rotation axis of a rotating body according to the one embodiment.
FIG. 5(A) is a schematic view illustrating a structure of an optical fiber according to the one embodiment, FIG. 5(B) is a schematic view illustrating an arrangement of the optical fiber, and FIG. 5(C) is a schematic view illustrating light emission areas of the first light emitted from the optical fiber.
FIG. 6 is a flowchart illustrating processing for transmitting state information from the first communication device to the second communication device according to the one embodiment.
FIG. 7 is a flowchart illustrating processing for switching between state-information transmission modes of the first communication device according to the one embodiment.
FIG. 8 is a schematic view illustrating a configuration of a first communication device that emits first light in a direction intersecting a rotation axis of a rotating body according to a first modified embodiment.
FIG. 9 is a schematic view illustrating a light emission area of first light when the first light is reflected by a reflective part according to the first modified embodiment.
FIG. 10 is a schematic view illustrating a configuration of a first communication device that emits first light in a direction intersecting a rotation axis of a rotating body according to a second modified embodiment.
FIG. 11(A) is a schematic view illustrating a structure of an optical fiber according to the second modified embodiment, FIG. 11(B) is a schematic view illustrating an arrangement of the optical fiber, and FIG. 11(C) is a schematic view illustrating light emission areas of the first light emitted from the optical fiber.
FIG. 12 is a schismatic view illustrating a configuration of an underwater optical wireless communication system according to a third modified embodiment.

### Modes for Carrying Out the Invention

Embodiments embodying the present invention will be described with reference to the drawings.

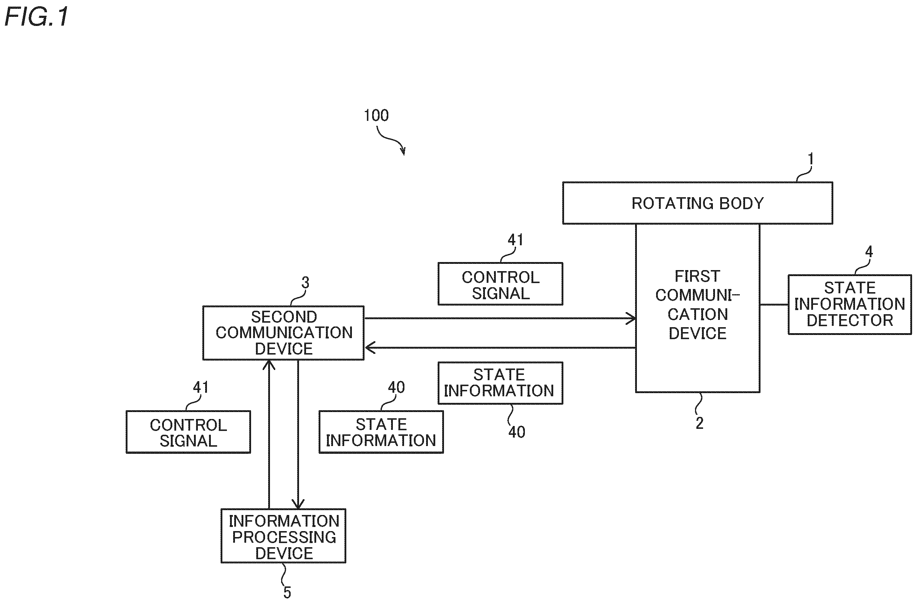

The following description describes an underwater optical wireless communication system 100 according to this embodiment reference to FIGS. 1 to 5.

### (Configuration of Underwater Optical Wireless Communication System)

The underwater optical wireless communication system 100 shown in FIG. 1 is an underwater optical wireless communication system for acquiring a state of a rotating body 1 rotating underwater. The rotating body 1 can be, for example, a propeller of a waterwheel, a propeller for propelling of a ship or other underwater moving object. In other words, the underwater optical wireless communication system 100 according to this embodiment is a system for acquiring the state of the propeller. The state of the propeller includes, for example, whether the rotating body 1 has distortion, and whether bubbles appear (cavitation occurs) on a surface of the rotating body 1 or the like.

As shown in FIG. 1, the underwater optical wireless communication system 100 includes a first communication device 2 and a second communication device 3.

The first communication device 2 is configured to transmit state information 40, which is input from a state information detector 4 for detecting the state information 40, which is information on a state of the rotating body 1, to the second communication device 3. Also, the first communication device 2 is configured to receive control signals 41 transmitted from the second communication device 3. The state information detector 4 includes, for example, a distortion sensor for detecting the distortion of the rotating body 1 and/or a camera for capturing images of the rotating body 1. Also, in a case in which the state information detector 4 is the distortion sensor, the state information 40 includes an output value of the distortion sensor. Also, in a case in which the state information detector 4 is the camera, the state information 40 includes the images captured by the camera. Also, in a case in which the state information detector 4 includes the distortion sensor and the camera, the state information 40 includes the output value of the distortion sensor and the images captured by the camera. The images captured by the camera may be video, still images, or include both video and still images.

In this embodiment, the state information detector 4 is provided to the rotating body 1 and rotates together with the rotating body 1. Accordingly, in the case the state information detector 4 is the camera, the camera rotates together with the rotating body 1, and images of blades of the rotating propeller can be captured as if the blades are static. As a result, it is possible to clearly capture an image of cavitation on the surface of the blades of the propeller.

The second communication device 3 is configured to receive the state information 40 transmitted from the first communication device 2. The second communication device 3 is configured to transmit the received state information 40 to the information processing device 5. Also, the second communication device 3 is configured to transmit the control signals 41 input from the information processing device 5 to the first communication device 2. The information processing device 5 is a PC (Personal Computer), for example.

In this embodiment, the rotating body 1, the first communication device 2, and the state information detector 4 are installed underwater. The second communication device 3 can be arranged underwater or in the atmosphere. Although the information processing device 5 is generally arranged in the atmosphere, the information processing device may be arranged in atmospheric space of a watertight casing if the information processing device is arranged underwater. In this embodiment, the second communication device 3 and the information processing device 5 are arranged in the atmosphere.

In this embodiment, the first communication device 2 and the second communication device 3 are wirelessly connected to each other, and communicate with each other through light. Also, the first communication device 2 and the state information detector 4 are connected through wires. Also, the second communication device 3 and the information processing device 5 are connected wirelessly or through wires to each other.

### (Exemplary Use of Underwater Optical Wireless Communication System)

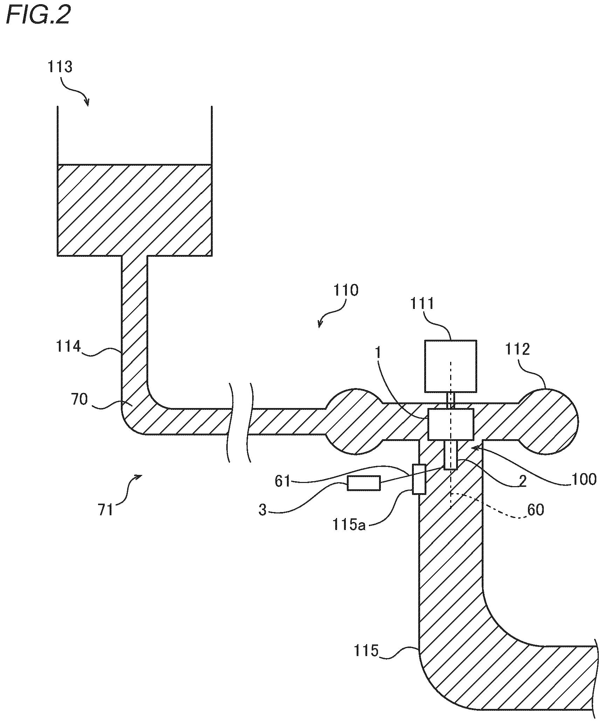

Exemplary use of the underwater optical wireless communication system 100 according to this embodiment is shown in FIG. 2. Specifically, the underwater optical wireless communication system 100 is configured to acquire state information 40 (see FIG. 1) on the propeller (rotating body 1) used in a hydroelectric power station 110. In the exemplary use shown in FIG. 2, an underwater area 70 is shown by a hatching pattern. In the exemplary use shown in FIG. 2, the rest area other than the underwater area 70 is an atmospheric area 71.

As shown in FIG. 2, the hydroelectric power station 110 includes a generator 111, a casing 112, a water reservoir 113, a first waterway 114 and a second waterway 115.

The generator 111 is connected to the rotating body 1. The generator 111 is configured to generate electric power when the rotating body 1 is rotated.

The casing 112 is configured to accommodate the rotating body 1. The casing 112 is connected to the water reservoir 113 through the first waterway 114.

The water reservoir 113 is configured to store water for rotating the rotating body 1. Also, the water reservoir 113 is connected to the casing 112 through the first waterway 114.

The first waterway 114 is a waterway connecting the water reservoir 113 to the casing 112. The first waterway 114 is the waterway for flowing the water stored in the water reservoir 113 into the casing 112.

The second waterway 115 is connected to the casing 112. The second waterway 115 is a waterway to drain the water from the casing 112.

The first communication device 2 is arranged in the rotating body 1 as shown in FIG. 2. That is, the first communication device 2 is configured to rotate together with the rotating body 1. The first communication device 2 is powered by a power source (not shown) connected to the first communication device through wires or a battery arranged in the rotating body 1 together with the first communication device 2.

Also, as shown in FIG. 2, the second communication device 3 is spaced away from the first communication device 2 in a direction intersecting a rotation axis 60 of the rotating body 1. The second communication device 3 is configured to wirelessly communicate with the first communication device 2 through light. The second communication device 3 is powered by the power source (not shown) connected to the second communication device through wires or a battery.

In this embodiment, a light-transmitting part 115a through which light can pass is arranged at a position in which the second waterway 115 intersects a straight line 61 connecting the first communication device 2 to the second communication device 3 so that the first communication device 2 and the second communication device 3 can wirelessly communicate with each other through light. The light-transmitting part 115a can be a hatch for maintenance or a window provided for communication between the first communication device 2 and the second communication device 3, for example. In other words, the light-transmitting part 115a separates the underwater area 70 from the atmospheric area 71. The light-transmitting part 115a includes a light-transmitting material such as an acrylic material or glass, for example. The straight line 61 is an imaginary line shown for ease of illustration.

### (First and Second Communication Devices)

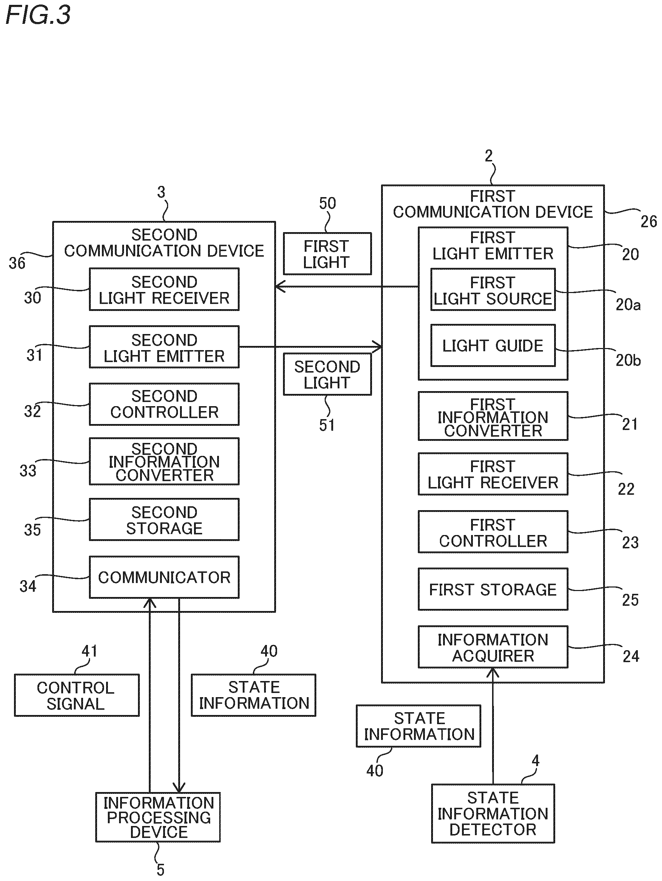

As shown in FIG. 3, the first communication device 2 includes a first light emitter 20 and a first information converter 21. Also, in this embodiment, the first communication device 2 includes a first light receiver 22, a first controller 23, an information acquirer 24, a first storage 25, and a housing 26.

The first light emitter 20 is configured to emit first light 50, which is light to be used for communication with the second communication device 3, in the direction intersecting the rotation axis 60 (see FIG. 2) of the rotating body 1 (see FIG. 2). The first light emitter 20 includes a first light source 20a and a light guide 20b.

The first light source 20a is configured to emit the first light 50. In this embodiment, the first light source 20a is configured to emit visible light as the first light 50. The first light source 20a is a light-emitting device including, for example, a light-emitting element, such as a laser diode.

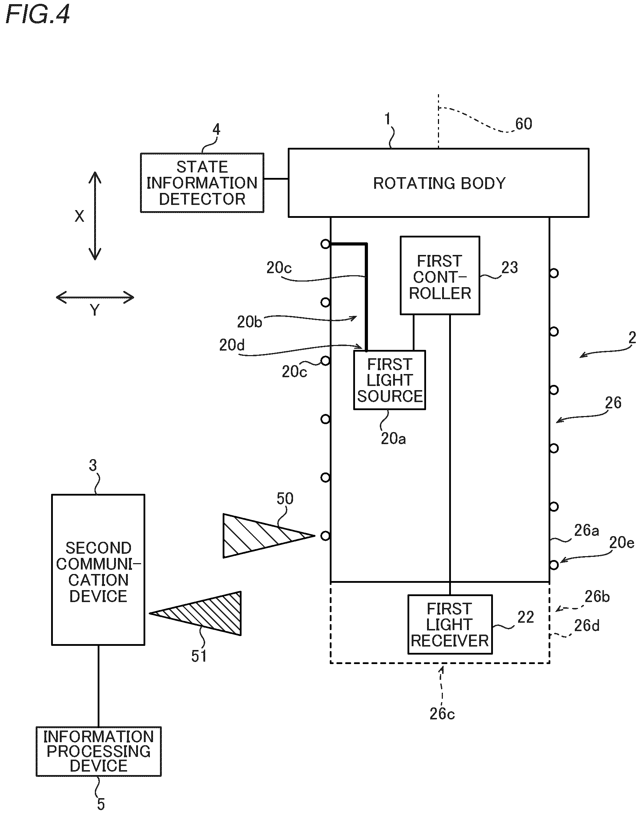

The light guide 20b is configured to guide first light 50, which is emitted from the first light source 20a, in the direction intersecting the rotation axis 60 of the rotating body 1. The light guide 20b is, for example, an optical fiber 20c (see FIG. 4). A detailed configuration of the light guide 20b (optical fiber 20c) and a detailed configuration for guiding the first light 50 in the direction intersecting the rotation axis 60 of the rotating body 1 by using the light guide 20b are described later. Here, in this specification, the term "guiding light" refers to changing an irradiation direction of the first light 50, which is emitted from the first light source 20a, until irradiation of the outside of the housing 26 with the first light 50.

The first information converter 21 is configured to convert electrical signals into light signals. Specifically, the first information converter 21 produces information on light emission patterns of the light signals corresponding to the electrical signals to be emitted by the first light source 20a. In this embodiment, the first information converter 21 is configured to convert the state information 40, which is input from the state information detector 4 for detecting the state information 40, which is information on the state of the rotating body 1, into the first light 50. That is, the first information converter 21 produces the information on the light emission patterns of the light signals corresponding to the electrical signals to be emitted based on the state information 40. The first information converter 21 is a functional block realized by executing a predetermined program by using the first controller 23. Also, the first information converter 21 is configured to convert the electrical signals, which are converted from light signals by the first light receiver 22, into information. In this embodiment, the first information converter 21 is configured to convert second light 51 (described later), which is transmitted from the second communication device 3 and converted into electrical signals by the first light receiver 22, into the control signals 41. The first information converter 21 is an example of an "information converter" in the claims.

The first light receiver 22 is configured to receive the second light 51 for communication, which is emitted from the second communication device 3. The first light receiver 22 includes a light receiver that can receive visible light. Also, the first light receiver 22 is configured to convert the received second light 51 into electrical signals. The first light receiver 22 includes, for example, a photodiode, a photomultiplier tube or the like.

The first controller 23 serves as a controller that controls parts of the first communication device 2 by executing various programs stored in the first storage 25. In this embodiment, the first controller 23 is configured to control the first communication device 2 so as to transmit the state information 40 by using the first light 50 based on the control signals 41 transmitted from the second controller 32 (described later). The first controller 23 is a computer, a processor or a circuitry including a CPU (Central Processing Unit), a ROM (Read Only Memory), a RAM (Random Access Memory) and the like.

The information acquirer 24 is configured to acquire the state information 40, which is input from the state information detector 4. Also, the information acquirer 24 is configured to output the acquired state information 40 to the first controller 23. For example, the information acquirer 24 is an input/output interface.

The first storage 25 is configured to store various programs to be executed by the first controller 23 and the state information 40 that has been acquired by the information acquirer 24. The first storage 25 is a nonvolatile storage, such as an HDD (Hard Disk Drive) or an SSD (Solid State Drive), for example.

The housing 26 is configured to accommodate the first light emitter 20 and the first light receiver 22 and to rotate together with the rotating body 1 (see FIG. 2). Here, in this embodiment, the housing 26 accommodates the first information converter 21, the first controller 23, the information acquirer 24 and the first storage 25 in addition to the first light emitter 20 and the first light receiver 22, and rotates together with the rotating body 1.

As shown in FIG. 3, the second communication device 3 includes a second light receiver 30. Also, in this embodiment, the second communication device 3 includes a second light emitter 31, a second controller 32, a second information converter 33, a communicator 34, a second storage 35, and a housing 36.

The second light receiver 30 is configured to receive the first light 50. The second light receiver 30 includes a light receiver that can receive visible light. Also, the second light receiver 30 is configured to convert the received first light 50 into electrical signals. The second light receiver 30 includes, for example, a photodiode, a photomultiplier tube or the like.

The second light emitter 31 is configured to emit the second light 51. In this embodiment, the second light emitter 31 is configured to emit visible light as the second light 51. The second light emitter 31 is a light-emitting device including, for example, a light-emitting element, such as a laser diode.

The second controller 32 serves as a controller that controls parts of the second communication device 3 by executing various programs stored in the second storage 35. Also, the second controller 32 is configured to control the second communication device 3 so as to transmit the control signals 41 that are signals for controlling the first communication device 2 by using the second light 51 to the first controller 23. The second controller 32 is a computer, a processor or a circuitry including a CPU, a ROM, a RAM and the like.

The second information converter 33 is configured to convert the electrical signals, which are converted from light signals by the second light receiver 30, into information. In this embodiment, the second information converter 33 is configured to convert the first light 50, which is emitted for irradiation from the first communication device 2 and received by the second light receiver 30, into the state information 40. Also, the second information converter 33 is configured to convert electrical signals into light signals. Specifically, the second information converter 33 produces information on light emission patterns of the light signals corresponding to the electrical signals to be emitted from the second light emitter 31. In this embodiment, the second information converter 33 is configured to convert the control signals 41 based on operating inputs input through the information processing device 5 into the second light 51. That is, the second information converter 33 produces the information on the light emission patterns of the light signals corresponding to the electrical signals to be emitted based on the control signals 41. The second information converter 33 is a functional block realized by executing a predetermined program by using the second controller 32.

The communicator 34 is configured to allow communication between the second communication device 3 and the information processing device 5. In this embodiment, the communicator 34 is configured to wirelessly connect the second communication device 3 to the information processing device 5. The communicator 34 includes, for example, a wireless communication component.

The second storage 35 is configured to store various programs to be executed by the second controller 32. The second storage 35 is a nonvolatile storage device, such as an HDD or an SSD, for example.

The housing 36 is configured to accommodate the second light receiver 30, the second light emitter 31, the second controller 32, the communicator 34, and the second storage 35.

In this embodiment, the first light emitter 20 (first light source 20a) is configured to emit the first light 50 whose wavelength band is different from the second light 51 so that the first communication device 2 and the second communication device 3 can bidirectionally communicate with each other at the same time. The second light emitter 31 is configured to emit the second light 51 whose wavelength band is different from the first light 50. Here, in this specification, the term "at the same time" in the statement "bidirectionally communicate with each other at the same time" refers to that irradiation with the first light 50 and irradiation with the second light 51 are performed at the same time. Also, the term "bidirectionally communicate" in the statement "bidirectionally communicate with each other at the same time" refers to that communication from the first communication device 2 to the second communication device 3 and communication from the second communication device 3 to the first communication device 2 are performed. In other words, the term "bidirectionally communicate with each other at the same time" refers to that the communication from the first communication device 2 to the second communication device 3 and the communication from the second communication device 3 to the first communication device 2 are performed while the irradiation with the first light 50 and the irradiation with the second light 51 are performed at the same time. Also, wavelength bands are different refers to that the wavelength band of the first light 50 and the wavelength band of the second light 51 have a certain degree of difference that allows to distinguish the first light and the second light even when the irradiation with the first light and the irradiation with the second light are performed at the same time.

### (Guidance of First Light in Direction Intersecting Rotation Axis of Rotating Body)

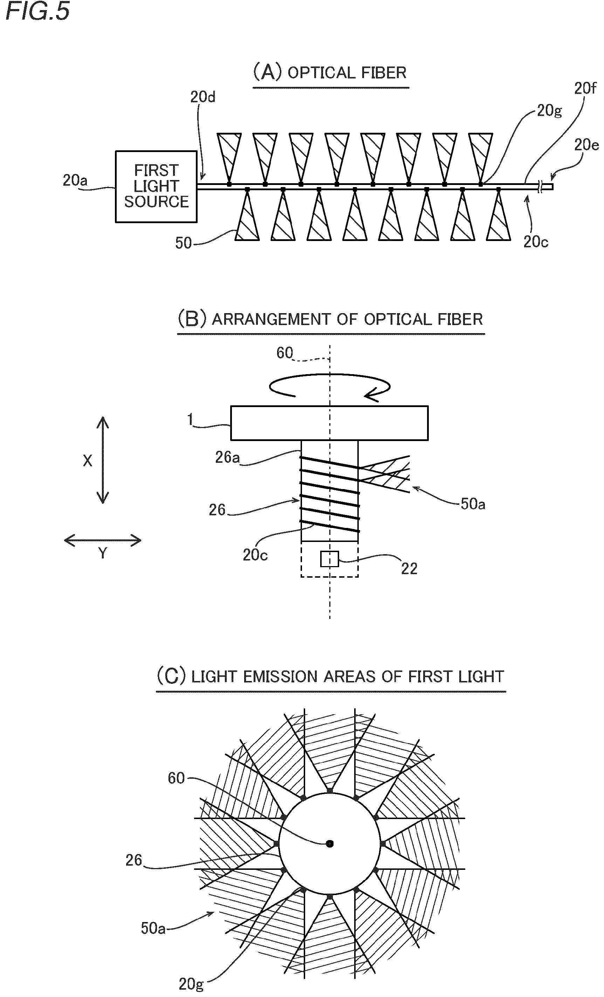

The following description describes the configuration for guiding the first light 50 in the direction intersecting the rotation axis 60 of the rotating body 1 by using the first light source 20a and the optical fiber 20c with reference to FIGS. 4 and 5. Here, the first light 50 and the second light 51 are shown by different hatching patterns in FIG. 4 for convenience of representing wavelength bands different from each other. Although light-transmitting part 115a is not illustrated in the exemplary configuration shown in FIG. 4, the light-transmitting part 115a is actually arranged between the first communication device 2 and the second communication device 3. That is, the rotating body 1, the first communication device 2, and the state information detector 4 are installed underwater, and the second communication device 3 and the information processing device 5 are installed in the atmosphere.

As shown in FIG. 4, the housing 26 has a cylindrical shape. In this embodiment, the housing 26 is configured to entirely rotate together with the rotating body 1. That is, the entire first communication device 2 rotates in a rotation direction about the rotation axis 60 of the rotating body 1.

Also, as shown in FIG. 4, the light guide 20b is the optical fiber 20c connected to the first light emitter 20 (first light source 20a). The optical fiber 20c has one end 20d connected to the first light source 20a in the housing 26, and another end 20e arranged on an exterior peripheral surface 26a of the housing 26.

As shown in FIG. 4, the optical fiber 20c is configured to guide the first light 50, which is emitted from the first light source 20a in the housing 26 in the direction intersecting the rotation axis 60 of the rotating body 1. Specifically, the light guide 20b (optical fiber 20c) is configured to guide the first light 50 in a plurality of radial directions of the rotating body 1. In the exemplary configuration shown in FIG. 4, an extension direction of the rotation axis 60 of the rotating body 1 is defined as an X direction. Also, a radial direction of the rotating body 1 is defined as a Y direction.

Also, as shown in FIG. 4, the housing 26 includes the light-transmitting part 26b, which allows light to pass through the light-transmitting part. The light-transmitting part 26b is formed of a light-transmitting material such as an acrylic material or glass, for example. Here, in FIG. 4, the light-transmitting part 26b is shown by a dashed line for ease of illustration. Here, in a case in which the second communication device 3 is arranged diagonally below the first communication device 2, the first communication device 2 is irradiated with the second light 51 from the second communication device 3 in a diagonal direction from a lower side. Accordingly, a bottom surface 26c of the light-transmitting part 26b is also configured to allow light to pass through the bottom surface. Here, in a case in which a side surface 26d of the light-transmitting part 26b is irradiated with the second light 51, the bottom surface 26c of the light-transmitting part 26b may not allow light to pass through the bottom surface.

The first light receiver 22 is arranged inside the light-transmitting part 26b. Accordingly, the first light receiver 22 can receive the second light 51 emitted from the second communication device 3.

The second communication device 3 transmits the control signals 41 (see FIG. 3) to the first communication device 2 by emitting the second light 51 from the second light emitter 31. Transmission timing of the control signals from the second communication device 3 to the first communication device 2 can be any time. Correspondingly, the first light receiver 22 is required to be able to receive the second light 51 at any time. That is, the first light receiver 22 is configured to be able to constantly receive the second light 51.

FIG. 5(A) is a schematic view illustrating a configuration of the optical fiber 20c for emitting the first light 50. As shown in FIG. 5(A), the optical fiber 20c is configured to emit the first light 50 from a plurality of positions on a side surface 20f of the optical fiber 20c. Specifically, a plurality of light emission parts 20g are arranged at different positions on the side surface 20f of the optical fiber 20c. The optical fiber 20c is configured to emit the first light 50 from each of the plurality of light emission parts 20g at different positions. Each of the plurality of light emission parts 20g emits the first light 50 within a predetermined angle range.

Here, the optical fiber 20c is configured to prevent emission of the first light 50 from an end 20e that is not connected to the first light source 20a, and positions on the side surface 20f in which no light emission part 20g is arranged. Each light emission part 20g is a part in which light is not totally reflected and through which light is emitted to the outside the optical fiber 20c. Also, the side surface 20f of the optical fiber 20c other than the light emission parts 20g is a part in which light is totally reflected and through which no light is emitted to the outside the optical fiber 20c.

FIG. 5(B) is a schematic view illustrating an arrangement of the optical fiber 20c on the housing 26. As shown in FIG. 5(B), the optical fiber 20c is arranged to be wound around the exterior peripheral surface 26a of the housing 26 with the optical fiber helically extending along the rotation axis 60 of the rotating body 1. In this embodiment, the optical fiber 20c is wound around the exterior peripheral surface 26a of the housing 26 so that the plurality of light emission parts 20g (see FIG. 5(A)) face in the plurality of radial directions of the housing 26. Also, as shown in FIG. 5(B), the optical fiber 20c is wound a plurality of turns on the housing 26. Also, the optical fiber 20c is wound around on the housing 26 with being inclined with respect to a plane extending in radial directions of the housing 26. Accordingly, the plurality of light emission parts 20g can be arranged at different positions in the X direction.

Here, each of the light emission parts 20g emits the first light 50 within a predetermined angle range also in the X direction. In this embodiment, the optical fiber 20c is wound around the housing 26 so that the irradiation areas 50a of the first light 50 emitted from the plurality of light emission parts 20g overlaps each other in the X direction.

FIG. 5 (C) is a schematic view of the housing 26 from the direction of the rotation axis 60 of the rotating body 1 (see FIG. 5 (B)). As shown in FIG. 5(C), since the first light 50 (see FIG. 5(A)) is emitted from the respective plurality of light emission parts 20g, the first light 50 can be emitted in the plurality of radial directions of the rotating body 1 irrespective of an angular position of the rotating body 1.

In this embodiment, as shown in FIG. 5(C), positions and irradiation angles of the irradiation areas 50a of the first light 50 are set to bring the respective irradiation areas of the first light 50 emitted from the light emission parts 20g adjacent to each other to overlap each other. Accordingly, in this embodiment, the light guide 20b (optical fiber 20c) is configured to emit the first light 50 (see FIG. 5(A)), which is guided in the plurality of radial directions of the rotating body 1, to cover an entire rotation-directional periphery of the rotating body 1 about the rotation axis 60. In this embodiment, the light guide 20b is configured to emit the first light 50 to cover the entire rotation-directional periphery of the rotating body 1 about the rotation axis 60 by using a single part. As a result, the second light receiver 30 (see FIG. 3) can constantly receive the first light 50 emitted from one or more light emission parts 20g at any rotational angular position of the rotating body 1 (housing 26).

Here, in a case in which the state information 40 (see FIG. 3) is video, operators desire to see the video in real time (successively) in some cases. To achieve this, in the case in which the state information 40 is video, the first controller 23 (see FIG. 3) is configured to continuously emit the first light 50. That is, the first controller 23 is configured to continuously transmit the state information 40, which is video, to the second communication device 3 (see FIG. 3).

Contrary to this, in a case in which the state information 40 is output values of a distortion sensor or the like, operators do not confirm the output values in real time (successively). To achieve this, in the case in which the state information 40 is the output values of the distortion sensor or the like, the first controller 23 is configured to emit the first light 50 at a predetermined time interval. The predetermined time interval can be stored in the first storage 25 (see FIG. 3) or transmitted from the second communication device 3 through the control signals 41 (see FIG. 3). Alternatively, even in the case in which the state information 40 is the output values of the distortion sensor or the like, the first controller 23 may be configured to continuously emit the first light 50. That is, the first controller 23 may be configured to transmit the state information 40, which is the output values of the distortion sensor or the like, to the second communication device 3 in real time (successively).

In this embodiment, the first controller 23 is configured to switch between continuous communication and intermittent communication at the predetermined interval based on the control signal 41 that is input by the operator through the information processing device 5 (see FIG. 1) and transmitted to the first communication device 2 through the second communication device 3. Alternatively, the first controller 23 may be configured to switch between continuous communication and intermittent communication at the predetermined interval depending on a type of the state information 40 as the first light 50 to be emitted.

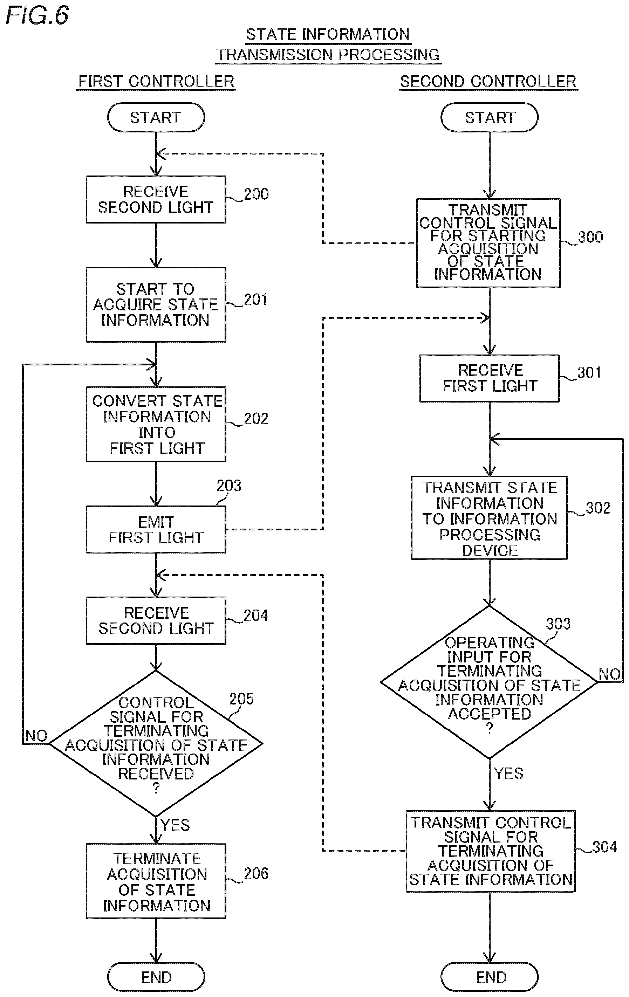

Processing procedure for transmitting the state information 40 (see FIG. 1) to the second communication device 3 (see FIG. 1) by using the first communication device 2 (see FIG. 1) is now described with reference to FIG. 6. Here, the processing procedure for transmitting the state information 40 to the second communication device 3 by using the first communication device 2 shown in FIG. 6 is executed during rotation of the rotating body 1 (see FIG. 1).

The processing procedure for transmitting the state information 40 to the second communication device 3 by using the first communication device 2 starts in response to an operating input for starting acquisition of the state information 40 that is input in the second communication device 3 by the operator.

In step 300, the second controller 32 (see FIG. 3) transmits a control signal 41 (see FIG. 3) for starting acquisition of the state information 40 to the first communication device 2 by emitting the second light 51 (see FIG. 3) by controlling the second light emitter 31 (see FIG. 3). Here, the second controller 32 controls emission of the second light 51 based on information from a light emission pattern based on the control signal 41 that is produced by the second information converter 33 (see FIG. 3) to start the acquisition of the state information 40. Accordingly, the second controller 32 transmits the control signal 41 for starting the acquisition of the state information 40 to the first communication device 2.

Subsequently, the processing procedure goes to a series of processes in the first communication device 2. In step 200, the first light receiver 22 (see FIG. 3) receives the control signal 41 for starting the acquisition of the state information 40 as the second light 51. The first controller 23 (see FIG. 3) acquires the control signal 41 that is received by the first light receiver 22 and converted into an electrical signal for starting the acquisition of the state information 40.

In step 201, the first controller 23 (see FIG. 3) starts to acquire the state information 40 from the state information detector 4 (see FIG. 1).

In step 202, the first information converter 21 converts the state information 40 into the first light 50 (see FIG. 3). Specifically, the first information converter 21 produces information on a light emission pattern of a light signal corresponding to the electrical signal of the state information 40 to be emitted by the first light source 20a (see FIG. 3).

In step 203, the first controller 23 emits the first light 50 toward the second communication device 3 based on the information on the light emission pattern produced based on the state information 40. The processes of step 202 and step 203 continue until a control signal 41 for terminating the acquisition of the state information 40 is transmitted from the second communication device 3.

Subsequently, the processing procedure goes to a series of processes in the second communication device 3. In step 301, the second light receiver 30 (see FIG. 3) receives the first light 50. Also, the second controller 32 acquires the first light 50 received by the second light receiver 30 as the state information 40.

In step 302, the second controller 32 transmits the acquired state information 40 to the information processing device 5 (see FIG. 1).

In step 303, the second controller 32 determines whether an operating input for terminating the acquisition of the state information 40 is input. If no operating input for terminating the acquisition of the state information 40 is input, the procedure goes to step 302. If the operating input for terminating the acquisition of the state information 40 is input, the procedure goes to step 304.

In step 304, the second controller 32 transmits a control signal 41 for terminating the acquisition of the state information 40 to the first communication device 2 through the second light 51 by controlling the second light emitter 31 (see FIG. 3). Here, the control signal 41 for terminating the acquisition of the state information 40 is transmitted as the second light 51 based on the light emission pattern produced by the second information converter 33 to the first communication device 2. Subsequently, the series of processes in the second communication device 3 ends.

Subsequently, the processing procedure goes to the series of processes in the first communication device **2.** In step 204, the first light receiver 22 receives the control signal 41 for terminating the acquisition of the state information 40 as the second light 51. The first controller 23 acquires the control signal 41 for terminating the acquisition of the state information 40 that is converted into an electrical signal by the first light receiver 22.

In step 205, the first controller 23 determines whether the control signal 41 for terminating the acquisition of the state information 40 is received. Specifically, the first controller 23 determines whether the second light 51 that is received by the first light receiver 22 is the control signal 41 for terminating the acquisition of the state information 40. If no control signal 41 for terminating the acquisition of the state information 40 is received, the procedure goes to step 202. If the control signal 41 for terminating the acquisition of the state information 40 is received, the procedure goes to step 206.

In step 206, the first controller 23 terminates the acquisition of the state information 40. Subsequently, the series of processes in the first communication device 2 ends.

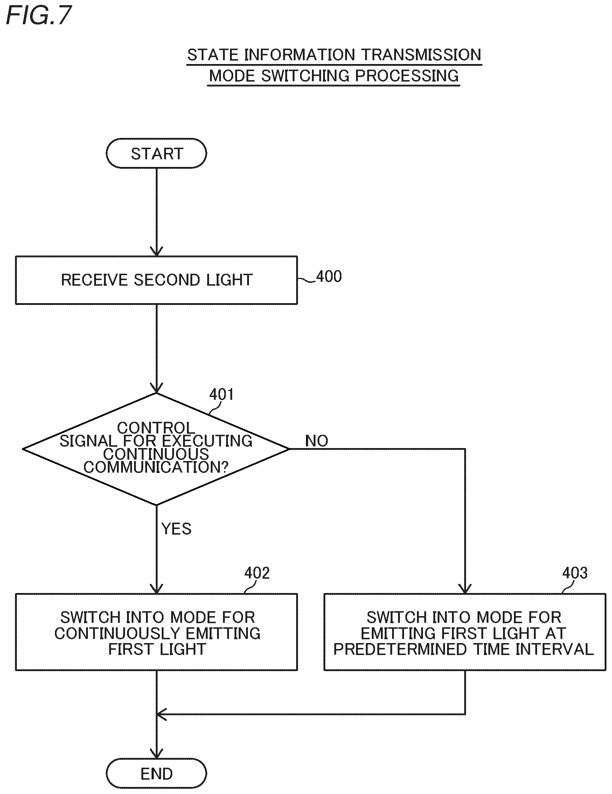

A processing procedure for switching between light emission modes of the first light 50 (see FIG. 3) in the first communication device 2 (see FIG. 3) is now described with reference to FIG. 7. Here, the processing procedure for switching between light emission modes of the first light 50 in the first communication device 2 starts in response to transmission of a control signal 41 (see FIG. 3) for switching between light emission modes of the first light 50 from the second communication device 3 (see FIG. 3).

In step 400, the first light receiver 22 (see FIG. 3) receives the second light 51 (see FIG. 3) emitted from the second communication device 3. The first controller 23 (see FIG. 1) acquires the control signal 41 that is converted into an electrical signal by the first light receiver 22.

In step 401, the first controller 23 determines whether the control signal 41 is a signal for executing continuous communication. If the control signal 41 is the signal for executing continuous communication, the procedure goes to step 402. If the control signal 41 is not the signal for executing continuous communication, the procedure goes to step 403.

In step 402, the first controller 23 switches the first communication device to a mode for continuously emitting the first light 50. After that, the procedure ends. Here, in a case in which the first communication device has been placed in the mode for continuously emitting the first light 50, step 402 is skipped.

If the procedure goes from step 401 to step 403, the first controller 23 switches the first communication device to a mode for emitting the first light 50 at a predetermined time interval in step 403. After that, the procedure ends. Here, in a case in which the first communication device has been placed in the mode for emitting the first light 50 at the predetermined time interval, step 403 is skipped.

### (Advantages of the Embodiment)

In this embodiment, the following advantages are obtained.

As discussed above, an underwater optical wireless communication system 100 according to this embodiment is an underwater optical wireless communication system for acquiring a state of a rotating body 1 underwater, the underwater optical wireless communication system including a first communication device 2 provided to the rotating body 1 for rotating together with the rotating body 1; and a second communication device 3 spaced away from the first communication device 2 in a direction (Y direction) intersecting a rotation axis 60 of the rotating body 1 to wirelessly communicate with the first communication device 2 by using light, wherein the first communication device 2 includes a first light emitter 20 for emitting first light 50 to be used for communication with the second communication device 3 as the light in the direction intersecting the rotation axis 60 of the rotating body 1, and a first information converter 21 for converting state information 40 input from a state information detector 4 for detecting the state information 40, which is information on the state of the rotating body 1, into the first light 50, and the second communication device 3 includes a second light receiver 30 for receiving the first light 50.

Accordingly, the first communication device 2 transmits the state information 40 by using the first light 50, which is light whose attenuation is smaller than radio waves in water. For this reason, even in a case in which the first communication device 2 is installed underwater together with the rotating body 1, the first communication device 2 and the second communication device 3 can wirelessly communicate with each other. Consequently, it is possible to provide the underwater optical wireless communication system 100 capable of acquiring information on the rotating body 1 rotating underwater (state information 40) through wireless communication by using the first communication device 2 installed together with the rotating body 1. Also, the first communication device 2 transmits the state information 40 to the second communication device 3 positioned in a direction intersecting the rotation axis 60 of the rotating body 1. Consequently, even if it is difficult to position the second communication device 3 in a direction (X direction) extending along the rotation axis 60 of the rotating body 1 with respect to the first communication device in order to constantly receive light (first light 50) from the first communication device 2 irrespective of a rotational angular position of the rotating body 1, the state information 40 can be transmitted from the first communication device 2 to the second communication device 3.

In addition, following additional advantages can be obtained by the aforementioned embodiment added with configurations discussed below.

That is, in this embodiment, as discussed above, the first communication device 2 further includes a first light receiver 22 for receiving second light 51 for communication as the light emitted from the second communication device 3; and the second communication device 3 further includes a second light emitter 31 for emitting the second light 51. Accordingly, the information can be transmitted from the second communication device 3 to the first communication device 2 by receiving the second light 51 emitted from the second light emitter 31 by using the first light receiver 22. Consequently, the first communication device 2 and the second communication device 3 can bidirectionally communicate with each other.

Also, in this embodiment, as described above, a housing 26 for accommodating the first light emitter 20 and the first light receiver 22 and rotating together with the rotating body 1 is further provided; and the first light emitter 20 includes a first light source 20a for emitting the first light 50, and a light guide 20b for guiding the first light 50, which is emitted from the first light source 20a in the housing 26, in the direction intersecting the rotation axis 60 of the rotating body 1. Accordingly, since the first light 50 emitted from the first light source 20a is guided by the light guide 20b, the first light 50 can be emitted in the direction intersecting the rotation axis 60 of the rotating body 1 irrespective of an arrangement of the first light source 20a. Consequently, it is possible to improve a degree of freedom of the arrangement of the first light source 20a.

Also, in this embodiment, as described above, the light guide 20b is configured to guide the first light 50 in a plurality of radial directions of the rotating body 1. Accordingly, it is possible to prevent reduction of an angle range of the first light 50 with which the second communication device 3 is irradiated as compared with a configuration in which the first light 50 is guided in only one of radial directions (Y directions) of the rotating body 1. In other words, it is possible to reduce the time period in which the first communication device 2 and the second communication device 3 cannot communicate with each other. As a result, it is possible to prevent increase of an interval of transmission of the state information 40 as compared with a configuration in which the first light 50 is transmitted only one direction of the radial directions of the rotating body 1. Consequently, it is possible to reduce time to transmit the state information 40 even in a case in which a large amount of data such as video is transmitted as the state information 40.

Also, in this embodiment, as described above, the light guide 20b is configured to emit the first light 50, which is guided in the plurality of radial directions (Y directions) of the rotating body 1, to cover an entire rotation-directional periphery of the rotating body 1 about the rotation axis 60. Accordingly, the second communication device 3 can be continuously irradiated with the first light 50 from the first communication device 2. For this reason, since the first communication device 2 and the second communication device 3 can continuously communicate with each other, it is possible to continuously transmit, for example, video successively acquired by the state information detector 4 from the first communication device 2 to the second communication device 3. Consequently, operators can confirm the video successively acquired by the state information detector 4 in real time (successively).

Also, in this embodiment, as described above, the light guide 20b is configured to emit the first light 50 to cover the entire rotation-directional periphery of the rotating body 1 about the rotation axis 60 by using a single part. Consequently, it is possible to effectively reduce increase of the number of parts as compared with a configuration in which the first light 50 is emitted by a plurality of parts to cover the entire rotation-directional periphery of the rotating body 1 about the rotation axis 60.

Also, in this embodiment, as described above, the light guide 20b is an optical fiber 20c connected to the first light emitter 20, and the optical fiber 20c is configured to emit the first light 50 from a plurality of positions on a side surface 20f of the optical fiber 20c. Accordingly, since the first light 50 is emitted from the plurality of positions on the side surface 20f of the optical fiber 20c, it is possible to easily emit the first light 50 in the plurality of radial directions (Y directions) of the rotating body 1 by using a single optical fiber 20c.

Also, in this embodiment, as described above, the optical fiber 20c is arranged to be wound around an exterior peripheral surface 26a of the housing 26 with the optical fiber helically extending along the rotation axis 60 of the rotating body 1. Accordingly, since the optical fiber 20c is wound around the exterior peripheral surface 26a of the housing 26, each of the plurality of positions of the side surface 20f of the optical fiber 20c (the plurality of positions of the light emission part 20g) from which the first light 50 is emitted for irradiation can face in corresponding one of the plurality of radial directions (Y directions) of the rotating body 1. Consequently, it is possible to easily emit the first light 50 to cover the entire rotation-directional periphery of the rotating body 1 about the rotation axis 60 by using a single optical fiber 20c.

Also, in this embodiment, as described above, the first communication device 2 further includes a first controller 23; the second communication device 3 further includes a second controller 32; the second controller 32 is configured to control the second communication device 3 so as to transmit the control signals 41 that are signals for controlling the first communication device 2 by using the second light 51 to the first controller 23; and the first controller 23 is configured to control the first communication device 2 so as to transmit the state information 40 by using the first light 50 based on the control signals 41 transmitted from the second controller 32. Accordingly, since the first communication device 2 can be controlled by the control signals 41 transmitted from the second communication device 3 to the first communication device 2, it is possible to easily cause the first communication device 2 to start and terminate transmission of the state information 40 through the second communication device 3, for example. Also, it is possible to easily control the interval of transmission of the state information 40 transmitted from the first communication device 2 to the second communication device 3. Consequently, user usability can be improved.

### [Modified Embodiments]

Note that the embodiment disclosed this time must be considered as illustrative in all points and not restrictive. The scope of the present invention is not shown by the above description of the embodiments but by the scope of claims for patent, and all modifications (modified embodiments) within the meaning and scope equivalent to the scope of claims for patent are further included.

### [First Modified Embodiment]

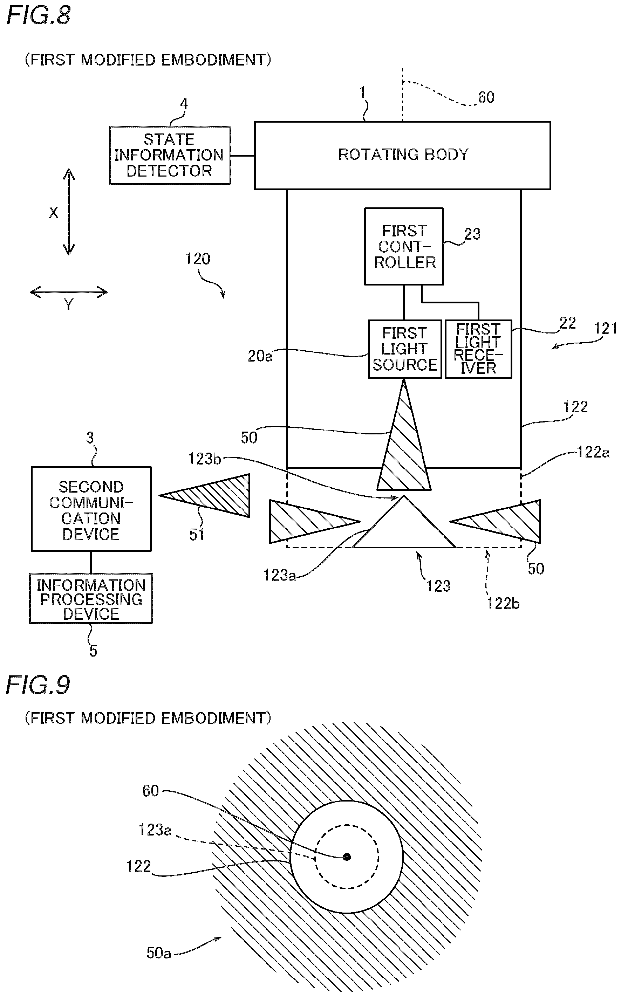

While the example in which the light guide 20b (see FIG. 3) is the optical fiber 20c (see FIG. 5(A)) for emitting the first light 50 (see FIG. 5(A)) from a plurality of positions on the side surface 20f (see FIG. 5(A)) has been shown in the aforementioned embodiment, the present invention is not limited to this. The light guide 20b may be a light-transmitting part (in an underwater optical wireless communication system 120 according to a first modified embodiment shown in FIG. 8, for example) other than the optical fiber 20c for emitting the first light 50 from the plurality of positions on the side surface 20f.

The underwater optical wireless communication system 120 according to the first modified embodiment is different from the underwater optical wireless communication system 100 according to the aforementioned embodiment from the viewpoint that a first communication device 121 is included instead of the first communication device 2 (see FIG. 3). The other configuration of the underwater optical wireless communication system 120 is similar to the configuration of the underwater optical wireless communication system 100 according to the aforementioned embodiment.

The first communication device 121 aforementioned the first modified embodiment is different from the first communication device 2 according to the aforementioned embodiment from the viewpoint that a housing 122 is included instead of the housing 26 (see FIG. 3) and a light guide 123 is included instead of the light guide 20b. The other configuration of the first communication device 121 is similar to the configuration of the first communication device 2 according to the aforementioned embodiment.

The housing 122 according to the first modified embodiment is different from the housing 26 according to the aforementioned embodiment from the viewpoint that the light guide 123 is accommodated instead of the light guide 20b.

The light guide 123 according to the first modified embodiment is different from the light guide 20b according to the aforementioned embodiment from the viewpoint that a reflective part 123a is included instead of the optical fiber 20c.

As shown in FIG. 8, in the first modified embodiment, the first light source 20a is configured to emit the first light 50 in a direction (X direction) extending along the rotation axis 60 of the rotating body 1. Here, the light-transmitting part 115a (see FIG. 2) is not illustrated also in an exemplary configuration shown in FIG. 8.

Also, in the first modified embodiment, the reflective part 123a is arranged at a position facing the first light source 20a in the housing 122. The reflective part 123a is configured to reflect the first light 50 in a plurality of radial directions (Y directions) of the rotating body 1. Specifically, the reflective part 123a has a pyramidal/conical shape and is configured to reflect the first light 50 in the plurality of radial directions of the rotating body 1. The reflective part 123a has a conical shape, for example, as the conical shape. Accordingly, the reflective part 123a as a single part can emit the first light 50 to cover the entire rotation-directional periphery of the rotating body 1 about the rotation axis 60. Also, the reflective part 123a is configured to emit the first light 50 at each X-directional position irradiated with the first light 50 to cover the entire rotation-directional periphery of the rotating body 1 about the rotation axis 60. Here, the reflective part 123a includes, for example, a prism, a lens, or the like.

Also, the reflective part 123a may have a pyramidal/conical shape other than the conical shape as long as the reflective part can reflect the first light 50 in a plurality of radial directions of the rotating body 1. In a case in which the reflective part 123a has such a pyramidal/conical shape other than the conical shape, the reflective part 123a preferably has a polygonal bottom shape that has a large number of sides. Also, the reflective part 123a may be formed by combining a plurality of plate-shaped materials. That is, the reflective part 123a may have a shape other than the pyramidal/conical shape as long as the reflective part can reflect the first light 50 in a plurality of radial directions of the rotating body 1.

Here, the housing 122 includes a light-transmitting part 122a, which allows light to pass through the light-transmitting part, in the first modified embodiment. The light-transmitting part 122a is formed of a light-transmitting material such as an acrylic material or glass, for example. Since the housing 122 includes the light-transmitting part 122a, the first light 50 reflected by the reflective part 123a is emitted in directions intersecting the rotation axis 60 of the rotating body 1. Here, in FIG. 8, the light-transmitting part 122a is shown by a dashed line for ease of illustration. Also, the bottom surface 122b of the light-transmitting part 122a may not allow light to pass through the light-transmitting part. The other configuration of the housing 122 is similar to the configuration of the housing 26 according to the aforementioned embodiment.

As shown in FIG. 8, the reflective part 123a is arranged inside the light-transmitting part 122a to face its top point 123b toward the first light source 20a side.

Also, the second light 51 emitted from the second communication device 3 passes through the light-transmitting part 122a so that the reflective part 123a is irradiated with the second light. The second light 51 with which the reflective part 123a is irradiated is reflected in the direction (X direction) extending along the rotation axis 60 of the rotating body 1. The first light receiver 22 is irradiated with the second light 51 through optical parts (not shown). As a result, bidirectional communication can be performed at the same time also in the underwater optical wireless communication system 120 according to the first modified embodiment. Also, in the first modified embodiment, since the second light 51 is reflected by the reflective part 123a toward the first light receiver 22, the first light receiver 22 can constantly receive the second light 51 irrespective of a rotational angular position of the rotating body 1. Here, the first light receiver 22 may be arranged coaxially with the first light source 20a.

FIG. 9 is a schematic view illustrating an irradiation area 50a of the first light 50 (see FIG. 8) reflected by the reflective part 123a. As shown in FIG. 9, also in the underwater optical wireless communication system 120 (see FIG. 8) according to a second modified embodiment, the irradiation area 50a of the first light 50 that is reflected to be emitted by the reflective part 123a covers the entire rotation-directional periphery of the rotating body 1 (see FIG. 8). Consequently, the first communication device 2 (see FIG. 8) and the second communication device 3 (see FIG. 8) can continuously communicate with each other also in the underwater optical wireless communication system 120 according to the first modified embodiment.

### (Advantages of First Modified Embodiment)

In the first modified embodiment, the following advantages are obtained.

In the first modified embodiment, as discussed above, the first light source 20a is configured to emit the first light 50 in a direction (X direction) extending along the rotation axis 60 of the rotating body 1, and the light guide 123 is a reflective part 123a that is arranged at a position facing the first light source 20a in the housing 122 to reflect the first light 50 in a plurality of radial directions (Y directions) of the rotating body 1. Accordingly, since the reflective part 123a is arranged at positions that face the first light source 20a, the first light 50 can be easily reflected in the plurality of radial directions of the rotating body 1 by a single reflective part 123a, dissimilar to a configuration in which the first light source 20a is provided for each of irradiation directions of the first light 50 for example. Consequently, it is possible to prevent increase of the number of parts and to easily guide the first light 50 in the plurality of radial directions of the rotating body 1.

Also, in the first modified embodiment, as described above, the reflective part 123a has a pyramidal/conical shape and is configured to reflect the first light 50 in the plurality of radial directions of the rotating body 1. Accordingly, since the reflective part 123a has a pyramidal/conical shape, the first light 50 can be easily reflected in the plurality of radial directions of the rotating body 1 by facing the top point 123b of the reflective part 123a toward the first light source 20a.

Here, the other advantages of the underwater optical wireless communication system 120 according to the first modified embodiment are similar to the advantages of the underwater optical wireless communication system 100 according to the aforementioned embodiment.

### [Second Modified Embodiment]

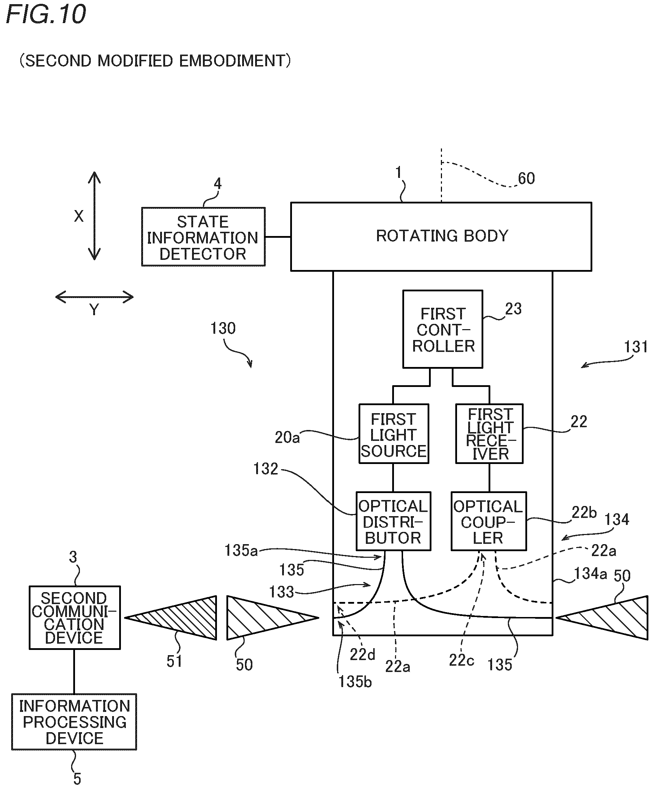

While the example in which the light guide 20b is the optical fiber 20c for emitting the first light 50 from a plurality of positions on the side surface 20f has been shown in the aforementioned embodiment, the present invention is not limited to this. The light guide 20b may be a light-transmitting part (in an underwater optical wireless communication system 130 according to a second modified embodiment shown in FIG. 10, for example) other than the optical fiber 20c for emitting the first light 50 from the plurality of positions on the side surface 20f. Here, light-transmitting part 115a (see FIG. 2) is not illustrated for ease of illustration in an exemplary configuration shown in FIG. 10.

The underwater optical wireless communication system 130 according to the second modified embodiment is different from the underwater optical wireless communication system 100 according to the aforementioned embodiment from the viewpoint that a first communication device 131 is included instead of the first communication device 2 (see FIG. 3). The other configuration of the underwater optical wireless communication system 130 is similar to the configuration of the underwater optical wireless communication system 100 according to the aforementioned embodiment.

The first communication device 131 is different from the first communication device 2 according to the aforementioned embodiment from the viewpoint that an optical distributor 132 is included, that a light guide 133 is included instead of a light guide 20b (see FIG. 3), that a housing 134 is included instead of the housing 26 (see FIG. 4), that a plurality of optical fibers 22a are included, and that an optical coupler 22b is included. The other configuration of the first communication device 131 is similar to the configuration of the first communication device 2 according to the aforementioned embodiment.

The housing 134 according to the second modified embodiment is different from the housing 26 according to the aforementioned embodiment from the viewpoint that the light guide 133 is accommodated instead of the light guide 20b, that the optical distributor 132 is accommodated, that the plurality of optical fibers 22a are accommodated, that the optical coupler 22b is accommodated, and that no light-transmitting part 26b is included.

The light guide 133 according to the second modified embodiment is different from the light guide 20b according to the aforementioned embodiment from the viewpoint that a plurality of optical fibers 135 are included instead of the optical fiber 20c (see FIG. 4).

As shown in FIG. 10, the light guide 133 according to the second modified embodiment includes the plurality of optical fibers 135 connected to the first light source 20a and arranged in the housing 134, and each of the plurality of optical fibers is provided for corresponding one of the plurality of radial directions of the rotating body 1 in which the first light 50 is guided. Here, in the second modified embodiment, each of the plurality of optical fibers 135 is connected to the first light source 20a through the optical distributor 132.

The optical distributor 132 is arranged between the first light source 20a and the plurality of optical fibers 135. The optical distributor 132 is configured to guide the first light 50 emitted from the first light source 20a to each of the plurality of optical fibers 135.

Each of the plurality of optical fibers 135 has one end 135a connected to the first light source 20a through the optical distributor 132, and another end as a light emission end 135b arranged on a side surface 134a of the housing 134. Accordingly, the light guide 133 according to the second modified embodiment can emit the first light 50 emitted from the single first light source 20a in the plurality of radial directions (Y directions) of the rotating body 1 by using the plurality of optical fibers 135.

Each of the plurality of optical fibers 22a has an end 22c on one side connected to the optical coupler 22b, and an end 22d on another side arranged on the side surface 134a of the housing 134. Each of the plurality of optical fibers 22a is configured to cause the second light 51, which is incident from the end 22d, to enter the first light receiver 22 through the optical coupler 22b. Also, the respective ends 22d of the plurality of optical fibers 22a are spaced at a predetermined angle interval on the side surface 134a of the housing 134 so that the second light 51 can be constantly received irrespective of a rotational angular position of the rotating body 1. In other words, the plurality of optical fibers 22a are arranged in the housing 134 so that areas in which light from the ends 22d on the another ends of the optical fibers 22a ca be received overlap each other.

The optical coupler 22b is configured to combine a plurality of respective fiver-passing parts of the second light 51, which are incident from the plurality of optical fibers 22a, into the second light 51 as one light part. The optical coupler 22b is configured to guide the second light 51 as the combined one light part to the first light receiver 22.

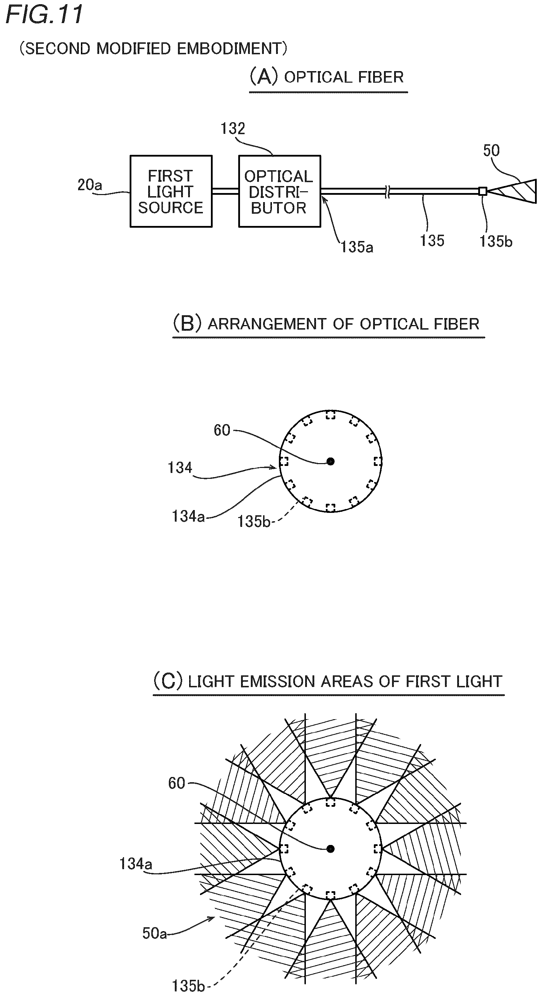

As shown in FIG. 11(A), the ends 135a of the optical fibers 135 are connected to the first light source 20a through the optical distributor 132. Also, the light emission end 135b is configured to emit the first light 50 for irradiation in a predetermined angle range. An optical element such as a lens is installed at each light emission end 135b, and a diffuser plate configured to emit light for irradiation in the predetermined angle range is arranged around each light emission end. Here, the optical element such as the lens may be integrated with the light emission end 135b.

As shown in FIG. 11(B), the plurality of optical fibers 135 (see FIG. 11(A)) are arranged in the housing 134 to space the light emission ends 135b at a predetermined interval away from each other in a circumferential direction of the side surface 134a of the housing 134. The interval between the light emission ends 135b is set in accordance with the angle range of the first light 50 emitted from each light emission end 135b. That is, the number of the optical fibers 135 is set in accordance with the angle range of the first light 50 emitted from each of the light emission ends 135b of the plurality of optical fibers 135.

In the second modified embodiment, as shown in FIG. 11(C), the respective light emission ends 135b, which are the ends opposite to the ends 135a (see FIG. 11(A)) connected to the first light source 20a (see FIG. 11 (A)), of the plurality of optical fibers 135 are configured to emit the first light 50 (see FIG. 11 (A)) so that the irradiation areas 50a of the first light 50 overlap each other.

In the second modified embodiment, the following advantages are obtained.

In the second modified embodiment, as discussed above, the light guide 133 includes a plurality of optical fibers 135 connected to the first light source 20a and arranged in the housing 134, and each of the plurality of optical fibers is provided for corresponding one of the plurality of radial directions (Y directions) of the rotating body 1 in which the first light 50 is guided. Accordingly, it is possible to easily guide the first light 50 from one first light source 20a to the plurality of radial directions of the rotating body 1 by using the plurality of optical fibers 135 dissimilar to a configuration in which the first light source 20a is provided for each of irradiation directions of the first light 50, for example. Consequently, it is possible to prevent increase of the number of parts and to easily guide the first light 50 in the plurality of radial directions of the rotating body 1.

Also, in the second modified embodiment, as described above, the light emission ends 135b, which are the ends opposite to the ends 135a connected to the first light source 20a, of the plurality of optical fibers 135 are configured to emit the first light 50 so that the irradiation areas 50a of the first light 50 overlap each other. Accordingly, since the light emission ends 135b cause the irradiation areas 50a of the first light 50 to overlap each other, it is possible to easily emit the first light 50 to cover the entire rotation-directional periphery of the rotating body 1 about the rotation axis 60. Consequently, the first communication device 2 and the second communication device 3 can easily continuously communicate with each other.

Here, the other advantages of the underwater optical wireless communication system 130 according to the second modified embodiment are similar to the advantages of the underwater optical wireless communication system 100 according to the aforementioned embodiment.

### [Third Modified Embodiment]

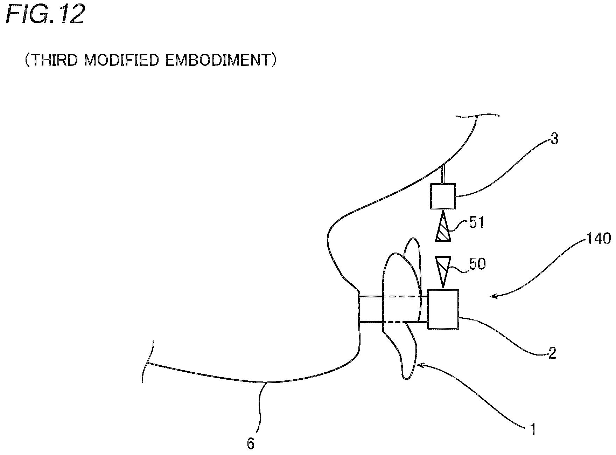

Also, while the example in which the underwater optical wireless communication system 100 is installed in the hydroelectric power station 110 (see FIG. 2) has been shown in the aforementioned embodiment, the present invention is not limited to this. For example, the underwater optical wireless communication system (as an underwater optical wireless communication system 140 according to a third modified embodiment shown in FIG. 12) may be configured to transmit the state information 40 on the rotating body 1 installed in a ship 6. The underwater optical wireless communication system 140 according to the third modified embodiment is different from the underwater optical wireless communication system 100 according to the aforementioned embodiment from the viewpoint that the first communication device 2 is provided to the rotating body 1 installed in the ship 6, and that the second communication device 3 is provided to the ship 6. Here, the other configuration of this underwater optical wireless communication system is similar to the configuration of the underwater optical wireless communication system 100 according to the aforementioned embodiment. The rotating body 1 installed in the ship 6 can be, for example, a propeller or screw. Here, the other configuration of the underwater optical wireless communication system 140 according to the third modified embodiment is similar to the configuration of the underwater optical wireless communication system 100 according to the aforementioned embodiment. Also, advantages similar to the underwater optical wireless communication system 100 according to the aforementioned embodiment can be obtained by the underwater optical wireless communication system 140 according to the third modified embodiment.

### [Other Modified Embodiments]

Also, while the example in which the first communication device 2 includes the first light receiver 22, the second communication device 3 includes the second light emitter 31, and the first communication device 2 and the second communication device 3 bidirectionally communicate with each other has been shown in the aforementioned embodiment, the present invention is not limited to this. For example, the first communication device 2 may not include the first light receiver 22, and the second communication device 3 may not include the second light emitter 31. That is, the first communication device 2 and the second communication device 3 may not bidirectionally communicate with each other if the state information 40 can be transmitted from the first communication device 2 to the second communication device 3 by using the first light 50. However, in a case in which the first communication device 2 and the second communication device 3 do not bidirectionally communicate with each other, it is difficult for operators to control the first communication device 2. For this reason, it is preferable that the first communication device 2 includes the first light receiver 22, and the second communication device 3 includes the second light emitter 31 so that the first communication device 2 and the second communication device 3 bidirectionally communicate with each other.

Also, while the example in which the wavelength band of the first light 50 emitted from the first light emitter 20 is different from the wavelength band of the second light 51 emitted from the second light emitter 31 has been shown in the aforementioned embodiment, the present invention is not limited to this. The wavelength band of the first light 50 emitted from the first light emitter 20 may be the same as the wavelength band of the second light 51 emitted from the second light emitter 31. In this case, if the first light 50 and the second light 51 are emitted at the same time, they are mixed up. To address this, in a case in which the wavelength band of the first light 50 is the same as the wavelength band of the second light 51, the first light 50 and the second light 51 can be alternately emitted to allow the first communication device 2 and the second communication device 3 to bidirectionally communicate with each other.

Also, while the example in which the light guide 20b is provided for corresponding one of the plurality of radial directions of the rotating body 1 in which the first light 50 is guided has been shown in the aforementioned embodiment, the present invention is not limited to this. For example, the light guide 20b may be configured to guide the first light 50 in one radial direction of the rotating body 1. However, in the case in which the light guide 20b is configured to guide the first light 50 in one radial direction of the rotating body 1, ineffective timing in which the second communication device 3 (second light receiver 30) cannot receive the first light 50 may be provided depending on a rotation angle of the rotating body 1. In other words, if the light guide 20b is configured to guide the first light 50 in one radial direction of the rotating body 1, the first communication device 2 and the second communication device 3 may not continuously communicate with each other. For this reason, it is preferable that the light guide 20b is configured to guide the first light 50 in a plurality of radial directions of the rotating body 1.

Also, while the example in which the light guide 20b emits the first light 50 to cover the entire rotation-directional periphery of the rotating body 1 about the rotation axis 60 has been shown in the aforementioned embodiment, the present invention is not limited to this. For example, the light guide 20b may not emit the first light 50 to cover the entire rotation-directional periphery of the rotating body 1 about the rotation axis 60 if emitting the first light 50 in a plurality of radial directions of the rotating body 1. However, if the light guide 20b is not configured to emit the first light 50 to cover the entire rotation-directional periphery of the rotating body 1 about the rotation axis 60, ineffective timing in which the second communication device 3 (second light receiver 30) cannot receive the first light 50 may be provided depending on a rotation speed and a rotation angle of the rotating body 1. In other words, if the light guide 20b is not configured to emit the first light 50 to cover the entire rotation-directional periphery of the rotating body 1 about the rotation axis 60, the first communication device 2 and the second communication device 3 may not continuously communicate with each other. For this reason, it is preferable that the light guide 20b is configured to emit the first light 50 to cover the entire rotation-directional periphery of the rotating body 1 about the rotation axis 60.

Also, while the example in which the first controller 23 controls start and termination of transmission of the state information 40 to the second communication device 3 based on the control signal 41 transmitted from the second communication device 3 has been shown in the aforementioned embodiment, the present invention is not limited to this. For example, the first controller 23 may be configured to control start and termination of transmission of the state information 40 to the second communication device 3 based on a rotation speed of the rotating body 1. In other words, the first controller 23 may be configured to start transmission of the state information 40 when the rotational speed of the rotating body 1 becomes greater than a predetermined speed, and to terminate the transmission of the state information 40 when the rotational speed of the rotating body 1 becomes smaller than the predetermined speed. Also, the first controller 23 may be configured to control the start and termination of transmission of the state information 40 based on a time of day.

While the example in which a configuration for emitting the first light 50 and a configuration for receiving the second light 51 are provided in the first communication device 2 (121, 131) according to each of the aforementioned embodiment, the first modified embodiment and the second modified embodiment has been shown, the present invention is not limited to this. Any of configurations for emitting the first light 50 and any of configurations for receiving the second light 51 in the first communication devices according to the aforementioned embodiment, the first modified embodiment and the second modified embodiment may be combined with each other.

Also, while the procedure for acquiring the state information 40 and the procedure for switching between modes of transmission of the state information 40 in the present invention have been described by using a flow-driven type flowchart in which processes are sequentially performed along a processing flow for sake of illustration in the aforementioned embodiment, the present invention is not limited to this. Alternatively, in the present invention, operation processes for acquiring the state information 40 and operation processes for switching between modes of transmission of the state information 40 may be executed in event-driven type processing in which the processes are executed on an event-by-event basis. In this case, the processes can be executed fully in the event-driven type processing or in combination of the event-driven type processing and flow-driven-step type processing.

### [Modes]

It is understood by those skilled in the art that the exemplary embodiments described above are specific examples of the following aspects.

### (Mode Item 1)

An underwater optical wireless communication system for acquiring a state of a rotating body rotating underwater includes a first communication device provided to the rotating body for rotating together with the rotating body; and a second communication device spaced away from the first communication device in a direction intersecting a rotation axis of the rotating body to wirelessly communicate with the first communication device by using light, wherein the first communication device includes a first light emitter for emitting first light to be used for communication with the second communication device as the light in the direction intersecting the rotation axis of the rotating body, and an information converter for converting state information input from a state information detector for detecting the state information, which is information on the state of the rotating body, into the first light, and the second communication device includes a second light receiver for receiving the first light.

### (Mode Item 2)

In the underwater optical wireless communication system according to mode item 1, the first communication device further includes a first light receiver for receiving second light for communication as the light emitted from the second communication device; and the second communication device further includes a second light emitter for emitting the second light.

### (Mode Item 3)

In the underwater optical wireless communication system according to mode item 2, a housing for accommodating the first light emitter and the first light receiver and rotating together with the rotating body, wherein the first light emitter includes a first light source for emitting the first light, and a light guide for guiding the first light, which is emitted from the first light source in the housing, in the direction intersecting the rotation axis of the rotating body.

### (Mode Item 4)

In the underwater optical wireless communication system according to mode item 3, the light guide is configured to guide the first light in a plurality of radial directions of the rotating body as the direction intersecting the rotation axis of the rotating body.

### (Mode Item 5)

In the underwater optical wireless communication system according to mode item 4, the light guide is configured to emit the first light, which is guided in the plurality of radial directions of the rotating body, to cover an entire rotation-directional periphery of the rotating body about the rotation axis.

### (Mode Item 6)

In the underwater optical wireless communication system according to mode item 5, the light guide is configured to emit the first light to cover the entire rotation-directional periphery of the rotating body about the rotation axis by using a single part.

### (Mode Item 7)

In the underwater optical wireless communication system according to any of mode items 3 to 6, the light guide is an optical fiber connected to the first light emitter; and the optical fiber is configured to emit the first light from a plurality of positions on a side surface of the optical fiber.

### (Mode Item 8)

In the underwater optical wireless communication system according to mode item 7, the optical fiber is arranged to be wound around an exterior peripheral surface of the housing with the optical fiber helically extending along the rotation axis of the rotating body.

### (Mode Item 9)

In the underwater optical wireless communication system according to any of mode items 3 to 6, the first light source is configured to emit the first light in a direction extending along the rotation axis of the rotating body; and the light guide is a reflective part that is arranged at a position facing the first light source in the housing to reflect the first light in a/the plurality of radial directions of the rotating body.

### (Mode Item 10)

In the underwater optical wireless communication system according to mode item 9, the reflective part has a pyramidal/conical shape and is configured to reflect the first light in the plurality of radial directions of the rotating body.

### (Mode Item 11)

In the underwater optical wireless communication system according to any of mode items 3 to 6, the light guide includes a plurality of optical fibers connected to the first light source and arranged in the housing, and each of the plurality of optical fibers is provided for corresponding one of a/the plurality of radial directions of the rotating body in which the first light is guided.

### (Mode Item 12)

In the underwater optical wireless communication system according to mode item 11, light emission ends of the plurality of optical fibers each of which is an end opposite to one end connected to the first light source are configured to emit the first light to light emission areas, and the light emission areas of the first light from the plurality of optical fibers overlap each other.

### (Mode Item 13)

In the underwater optical wireless communication system according to any of mode items 2 to 12, the first communication device further includes a first controller; the second communication device further includes a second controller; the second controller is configured to control the second communication device so as to transmit a control signal that is a signal for controlling the first communication device by using the second light to the first controller; and the first controller is configured to control the first communication device so as to transmit the state information by using the first light based on the control signal transmitted from the second controller.

### Description of Reference Numerals

1; rotating body
2, 121, 131; first communication device
3; second communication device
4; state information detector
20; first light emitter
20a; first light source
20b, 123, 133; light guide
20c; optical fiber
21; first information converter (information converter)
22; first light receiver
23; first controller
26, 122, 134; housing
30; second light receiver
31; second light emitter
32; second controller
40; state information
41; control signal
50; first light
51; second light
60; rotation axis (rotation axis of rotating body)
100, 120, 130, 140; underwater optical wireless communication system
123a; reflective part
135; optical fibers
135a; light emission end

## Claims

1. An underwater optical wireless communication system for acquiring a state of a rotating body rotating underwater, the underwater optical wireless communication system comprising:
a first communication device provided to the rotating body for rotating together with the rotating body; and
a second communication device spaced away from the first communication device in a direction intersecting a rotation axis of the rotating body to wirelessly communicate with the first communication device by using light, wherein
the first communication device includes
a first light emitter for emitting first light to be used for communication with the second communication device as the light in the direction intersecting the rotation axis of the rotating body, and
an information converter for converting state information input from a state information detector for detecting the state information, which is information on the state of the rotating body, into the first light, and
the second communication device includes a second light receiver for receiving the first light.

2. The underwater optical wireless communication system according to claim 1, wherein
the first communication device further includes a first light receiver for receiving second light for communication as the light emitted from the second communication device; and
the second communication device further includes a second light emitter for emitting the second light.

3. The underwater optical wireless communication system according to claim 2 further comprising a housing for accommodating the first light emitter and the first light receiver and rotating together with the rotating body, wherein
the first light emitter includes a first light source for emitting the first light, and a light guide for guiding the first light, which is emitted from the first light source in the housing, in the direction intersecting the rotation axis of the rotating body.

4. The underwater optical wireless communication system according to claim 3, wherein the light guide is configured to guide the first light in a plurality of radial directions of the rotating body as the direction intersecting the rotation axis of the rotating body.

5. The underwater optical wireless communication system according to claim 4, wherein the light guide is configured to emit the first light, which is guided in the plurality of radial directions of the rotating body, to cover an entire rotation-directional periphery of the rotating body about the rotation axis.

6. The underwater optical wireless communication system according to claim 5, wherein the light guide is configured to emit the first light to cover the entire rotation-directional periphery of the rotating body about the rotation axis by using a single part.

7. The underwater optical wireless communication system according to any of claims 3 to 6, wherein
the light guide is an optical fiber connected to the first light emitter; and
the optical fiber is configured to emit the first light from a plurality of positions on a side surface of the optical fiber.

8. The underwater optical wireless communication system according to claim 7, wherein the optical fiber is arranged to be wound around an exterior peripheral surface of the housing with the optical fiber helically extending along the rotation axis of the rotating body.

9. The underwater optical wireless communication system according to any of claims 3 to 6, wherein
the first light source is configured to emit the first light in a direction extending along the rotation axis of the rotating body; and
the light guide is a reflective part that is arranged at a position facing the first light source in the housing to reflect the first light in a/the plurality of radial directions of the rotating body.

10. The underwater optical wireless communication system according to claim 9, wherein the reflective part has a pyramidal/conical shape and is configured to reflect the first light in the plurality of radial directions of the rotating body.

11. The underwater optical wireless communication system according to any of claims 3 to 6, wherein the light guide includes a plurality of optical fibers connected to the first light source and arranged in the housing, and each of the plurality of optical fibers is provided for corresponding one of a/the plurality of radial directions of the rotating body in which the first light is guided.

12. The underwater optical wireless communication system according to claim 11, wherein light emission ends of the plurality of optical fibers each of which is an end opposite to one end connected to the first light source are configured to emit the first light to light emission areas, and the light emission areas of the first light from the plurality of optical fibers overlap each other.

13. The underwater optical wireless communication system according to claim 2, wherein
the first communication device further includes a first controller;
the second communication device further includes a second controller;
the second controller is configured to control the second communication device so as to transmit a control signal that is a signal for controlling the first communication device by using the second light to the first controller; and
the first controller is configured to control the first communication device so as to transmit the state information by using the first light based on the control signal transmitted from the second controller.
